# EUROPEAN PATENT APPLICATION

(11) **EP 4 572 361 A1**
(43) Date of publication of application: **18.06.2025**
(21) Application number: 22954253.5
(22) Date of filing: 08.08.2022
(51) Int. Cl.: H04W 12/106

(54) **METHOD AND APPARATUS FOR CONDITIONAL PRIMARY SECONDARY CELL (PSCELL) ADDITION OR CHANGE**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/110949
(87) International publication number: WO 2024/031273

(57) **Abstract**

Embodiments of the present disclosure disclose a processing method and apparatus for conditional primary secondary cell (PSCell) addition or change (CPAC), applicable to the technical field of communications. The method performed by a terminal device comprises: if CPAC is successful, recording trigger information of the CPAC; and sending the trigger information to a network device. Thus, recording the trigger information of the CPAC and synchronizing same to the network device provides a basis and conditions for improving the accuracy of execution condition configuration of the CPAC and the robustness of the CPAC.

## Description

### TECHNICAL FIELD

The disclosure relates to the fields of communication technologies, in particular to a conditional primary secondary cell (PScell) addition or change (CPAC) method and a communication apparatus.

### BACKGROUND

In a conditional primary secondary cell (PScell) addition or change (CPAC) mechanism, a network device can configure a plurality of candidate PScells and associated execution condition configurations for a terminal. The terminal then evaluates trigger conditions, and when an execution condition in the execution condition configuration of any candidate PScell is satisfied, the terminal directly initiates random access to the candidate PScell.

### SUMMARY

Embodiments of the disclosure provide a conditional primary secondary cell (PScell) addition or change (CPAC) processing method and a communication apparatus.

According to a first aspect of embodiments of the disclosure, a CPAC processing method is provided. The method is performed by a terminal, and includes: in a case where CPAC is successful, recording trigger information of the CPAC; and sending the trigger information to a network device.

In the disclosure, after determining that the CPAC is successful, the terminal records the trigger information of the CPAC and synchronize the trigger information to the network device. The trigger information of the CPAC is recorded and synchronized to the network device, which provides conditions and basis for improving an accuracy of the execution condition configuration of the CPAC and a robustness of the CPAC.

According to a second aspect of embodiments of the disclosure, a CPAC processing method is provided. The method is performed by a network device, and includes: receiving trigger information of the CPAC sent by a terminal, in which the trigger information is recorded by the terminal in a case where the CPAC is successful.

In this disclosure, the network device may receive the trigger information of the CPAC sent by the terminal in the case where the CPAC is successful, which provides conditions and basis for improving the accuracy of the execution condition configuration CPAC and the robustness of CPAC.

According to a third aspect of embodiments of the disclosure, a communication apparatus is provided. The apparatus includes:
a processing module, configured to, in a case where CPAC is successful, record trigger information of the CPAC; and
a transceiver module, configured to send the trigger information to a network device.

According to a fourth aspect of embodiments of the disclosure, a communication apparatus is provided. The apparatus includes:
a transceiver module, configured to receive trigger information of the CPAC sent by a terminal, in which the trigger information is recorded by the terminal in a case where the CPAC is successful.

According to a fifth aspect of embodiments of the disclosure, a communication apparatus is provided. The communication apparatus includes: a processor. When the processor calls computer programs stored in a memory, the method described in the first aspect above is implemented.

According to a sixth aspect of embodiments of the disclosure, a communication apparatus is provided. The communication apparatus includes: a processor. When the processor calls computer programs stored in a memory, the method described in the second aspect above is implemented.

According to a seventh aspect of embodiments of the disclosure, a communication apparatus is provided. The communication apparatus includes: a processor and a memory having computer programs stored therein. When the processor executes the computer programs stored in the memory, the communication apparatus is caused to implement the method described in the first aspect above.

According to an eighth aspect of embodiments of the disclosure, a communication apparatus is provided. The communication apparatus includes: a processor and a memory having computer programs stored therein. When the processor executes the computer programs stored in the memory, the communication apparatus is caused to implement the method described in the second aspect above.

According to a ninth aspect of embodiments of the disclosure, a communication apparatus is provided. The communication apparatus includes: a processor and an interface circuit. The interface circuit is configured to receive code instructions and transmit the code instructions to the processor. The processor is configured to run the code instructions to cause the device to perform the method described in the first aspect above.

According to a tenth aspect of embodiments of the disclosure, a communication apparatus is provided. The communication apparatus includes: a processor and an interface circuit. The interface circuit is configured to receive code instructions and transmit the code instructions to the processor. The processor is configured to run the code instructions to cause the device to perform the method described in the second aspect above.

According to an eleventh aspect of embodiments of the disclosure, a communication system is provided. The system includes the communication apparatus of the third aspect and the communication apparatus of the fourth aspect; or the system includes the communication apparatus of the fifth aspect and the communication apparatus of the sixth aspect; or the system includes the communication apparatus of the seventh aspect and the communication apparatus of the eighth aspect; or the system includes the communication apparatus of the fifth aspect.

According to a twelfth aspect of embodiments of the disclosure, a computer-readable storage medium is provided. The computer-readable storage medium is configured to store instructions used by the above terminal. When the instructions are executed, the terminal is caused to implement the method of the first aspect.

According to a thirteenth aspect of embodiments of the disclosure, a computer-readable storage medium is provided. The readable storage medium is configured to store instructions used by the above network device. When the instructions are executed, the network device is caused to implement the method of the second aspect.

According to a fourteenth aspect of embodiments of the disclosure, a computer program product including computer programs is provided. When the computer programs are running on a computer, the computer is caused to implement the method of the first aspect.

According to a fifteenth aspect of embodiments of the disclosure, a computer program product including computer programs is provided. When the computer programs are running on a computer, the computer is caused to implement the method of the second aspect.

According to a sixteenth aspect of embodiments of the disclosure, a chip system is provided. The chip system includes at least one processor and an interface for supporting the terminal in realizing the functions involved in the first aspect, e.g., determining or processing at least one of data or information involved in the method described above. In a possible design, the chip system further includes a memory. The memory is configured to store necessary computer programs and data for the terminal. The chip system may consist of chips or may include a chip and other discrete components.

According to a seventeenth aspect of embodiments of the disclosure, a chip system is provided. The chip system includes at least one processor and an interface for supporting the network device in realizing the functions involved in the second aspect, e.g., determining or processing at least one of data or information involved in the method described above. In a possible design, the chip system further includes a memory. The memory is configured to store necessary computer programs and data for the network device. The chip system may consist of chips or may include a chip and other discrete components.

According to an eighteenth aspect of embodiments of the disclosure, a computer program is provided. When the computer program is running on a computer, the computer is caused to implement the method of the first aspect.

According to a nineteenth aspect of embodiments of the disclosure, a computer program is provided. When the computer program is running on a computer, the computer is caused to implement the method of the second aspect.

### BRIEF DESCRIPTION OF THE DRAWINGS

**In** order to clearly illustrate technical solutions of embodiments of the disclosure or background technologies, a description of drawings used in the embodiments or the background technologies is given below.
FIG. 1 is a schematic diagram of a communication system according to an embodiment of the disclosure.
FIG. 2 is a flowchart of a conditional primary secondary cell (PScell) addition or change (CPAC) method according to an embodiment of the disclosure.
FIG. 3 is a flowchart of a CPAC method according to another embodiment of the disclosure.
FIG. 4 is a flowchart of a CPAC method according to yet another embodiment of the disclosure.
FIG. 5 is a flowchart of a CPAC method according to further another embodiment of the disclosure.
FIG. 6 is a flowchart of a CPAC method according to further another embodiment of the disclosure.
FIG. 7 is a flowchart of a CPAC method according to further another embodiment of the disclosure.
FIG. 8 is a flowchart of a CPAC method according to further another embodiment of the disclosure.
FIG. 9 is a flowchart of a CPAC method according to further another embodiment of the disclosure.
FIG. 10 is a schematic diagram of a communication apparatus according to an embodiment of the disclosure.
FIG. 11 is a schematic diagram of a communication apparatus according to another embodiment of the disclosure.
FIG. 12 is a schematic diagram of a chip according to an embodiment of the disclosure.

### DETAILED DESCRIPTION

For the convenience of understanding, terms involved in this disclosure are first introduced.

### 1. Primary secondary cell (PScell)

Dual connectivity (DC) terminal is able to access two cell groups, namely a master cell group (MCG) and a secondary cell group (SCG). The MCG is a group in which the terminal initiates random access for the first time. The primary cell in the SCG, that is, the cell that initiates initial access under the SCG, is called the PScell.

### 2. Conditional PScell addition or change (CPAC)

The 3rd generation partnership project (3GPP) has introduced a Conditional Handover (CHO) mechanism in the R16 to improve the robustness of handover process, and a related mechanism is expanded to PScell addition or change scenarios to improve the robustness of the PScell addition or change, which is called the CPAC.

The core idea of CPAC mechanism is that by configuring a plurality of candidate PScells and associated execution condition configurations for the terminal, the terminal evaluates trigger conditions and directly accesses a target PScell, to improve the robustness of the PScell addition or change.

### 3. Target PScell

The target PScell is a PScell that the terminal, in the process of the CPAC, determines that a corresponding trigger condition is satisfied and is able to access.

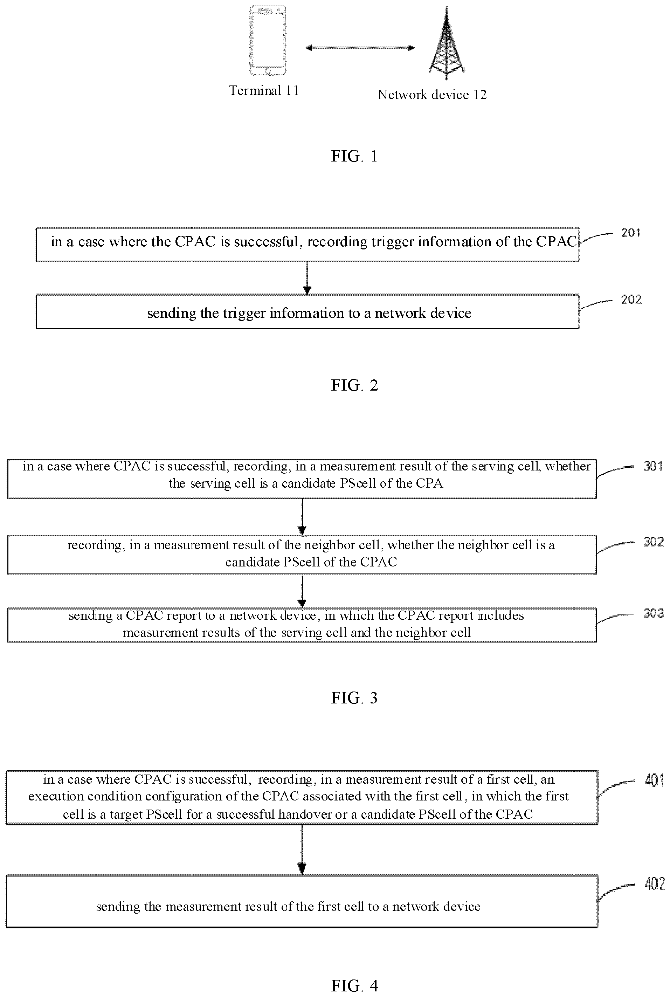

FIG. 1 is a schematic diagram of a communication system according to an embodiment of the disclosure. The communication system may include, but is not limited to, one network device and one terminal. The number and form of devices shown in FIG. 1 are only for examples and do not constitute a limitation on the embodiments of the disclosure. In practical applications, two or more terminals and two or more network devices may be included. The communication system shown in FIG. 1 includes a terminal 11 and a network device 12.

It is noteworthy that the technical solution of the embodiment of the disclosure can be applied to various communication systems, such as, a long term evolution (LTE) system, a 5th generation (5G) mobile communication system, a 5G new radio (NR) system, or other future new mobile communication systems.

The terminal in the embodiment of the disclosure is an entity on a user side for receiving or transmitting signals, such as a cellular phone. The terminal may also be referred to as terminal, user equipment (UE), mobile station (MS), mobile terminal (MT), and the like. The terminal may be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiment of the disclosure.

The network device 12 in the embodiment of the disclosure is an entity on a network side for transmitting or receiving signals. For example, the network device 12 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiment of the disclosure. The network device according to the embodiment of the disclosure may be composed of a central unit (CU) and a distributed unit (DU). The CU may also be called control unit. The use of CU-DU structure allows to divide a protocol layer of the network device, such as a base station, such that some of the protocol layer functions are placed in the CU for centralized control, and some or all of the remaining protocol layer functions are distributed in the DU, which is centrally controlled by the CU.

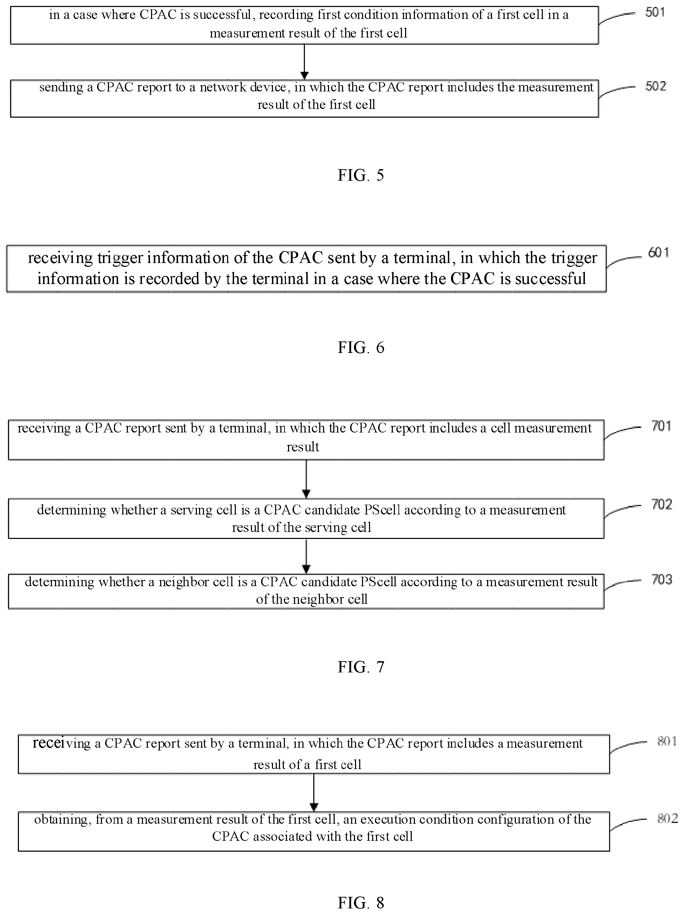

In the system, the terminal can implement the method shown in any embodiment of FIGS. 2-5 of this disclosure. The network device 12 can implement the method shown in any of the embodiments of FIGS. 6-9.

It is understandable that the communication system in the embodiment of the disclosure is introduced first to clearly illustrate the technical solution according to the embodiment of the disclosure, and does not constitute a limitation on the technical solution according to the embodiment of the disclosure. Those skilled in the art understand that as system architectures evolve and new business scenarios emerge, the technical solution according to the embodiment of the disclosure is also applicable to similar technical problems.

In the disclosure, when it is determined that CPAC is successful, trigger information of the CPAC is recorded and sent to the network device. By synchronizing the trigger information of the CPAC to the network device, the network device may update or adjust an execution condition configuration of the CPAC according to the successful trigger information of the CPAC, which provides basis and conditions for improving an accuracy of the execution condition configuration of the CPAC and a robustness of the CPAC.

FIG. 2 is a flowchart of a CPAC processing method according to an embodiment of the disclosure. The method is performed by a terminal. As illustrated in FIG. 2, the method includes but is not limited to the following steps.

At step 201, in a case where CPAC is successful, trigger information of the CPAC is recorded.

The CPAC being successful means that the terminal determines, by evaluating a trigger condition, that a trigger condition in an execution condition configuration of a certain candidate PScell is satisfied, and successfully accesses the candidate PScell.

Optionally, the trigger information may include information about whether a serving cell and/or a neighbor cell is a candidate PScell of the CPAC.

The serving cell is a serving cell where the terminal is located after successfully performing the CPAC, and the neighbor cell is a neighbor cell of the serving cell where the terminal is located after successfully performing the CPAC.

That is, after the CPAC is successful, the terminal may record whether the serving cell, where the terminal is located after the CPAC is successful, is one of a plurality of candidate PScells configured by the network device. Alternatively, the terminal may record whether the current neighbor cell is a candidate PScell configured by the network device. Alternatively, the terminal may record whether the serving cell is one of a plurality of candidate PScells configured by the network device and whether the neighbor cell is the candidate PScell configured by the network device.

Optionally, the trigger information may include an execution condition configuration of the CPAC associated with the serving cell and/or the neighbor cell.

The execution condition configuration is an execution condition associated with the candidate PScell configured by the network device, and the execution condition configuration may include various trigger conditions for triggering access to the candidate PScell.

In the disclosure, when the terminal determines that the current serving cell is the candidate PScell of the CPAC, the terminal may record the execution condition configuration of the candidate PScell. Alternatively, when the current neighbor cell is the candidate PScell of the CPAC, the execution condition configuration of the candidate PScell may be recorded. Alternatively, when both the serving cell and the neighbor cell are CPAC candidate PScells, the execution condition configurations of the candidate PScells associated respectively with the serving cell and the neighbor cell may be recorded.

Optionally, the trigger information may include first condition information.

The first condition information may include: information about whether a trigger condition is satisfied, a trigger condition that is satisfied first, and a satisfaction time interval between a time when a trigger condition is satisfied and another time when another trigger condition is satisfied subsequently
Generally, two measure IDs are configured in the execution condition configuration of each candidate PScell. In sequence, a first measure ID is associated with a first trigger condition, and a second Measure ID is associated with a second trigger condition. When all trigger conditions of a certain candidate PScell are satisfied, the random access to the candidate PScell may be initiated.

Correspondingly, the first condition information includes: information about whether the first trigger condition is satisfied, information about whether the second trigger condition is satisfied, the trigger condition that is satisfied first, and the satisfaction time interval between a time when a trigger condition is satisfied and another time when another trigger condition is satisfied subsequently.

The first trigger condition is a trigger condition associated with the first Measure ID in the execution condition configuration of the CPAC, and the second trigger condition is a trigger condition associated with the second Measure ID in the execution condition configuration of the CPAC.

Usually, one measure ID is associated with a mapping between one measured object and one report configuration (trigger condition), and one report configuration may be configured with various triggered events. When all the triggered events in the report configuration are satisfied, the trigger condition is satisfied.

At step 202, the trigger information is sent to a network device.

Optionally, the terminal may send the trigger information through a CPAC report, i.e., the terminal send the CPAC report containing the trigger information to the network device.

Optionally, the CPAC report may include measurement results of each cell. The measurement result of a certain cell includes information such as whether the cell is the candidate PScell and the associated execution condition configuration of the CPAC. Therefore, after the CPAC is successful, the terminal may synchronize the trigger information of the CPAC to the network device by sending the CPAC report.

In the disclosure, after determining that the CPAC is successful, the terminal records the trigger information of the CPAC and synchronize the trigger information to the network device. The trigger information of the CPAC is recorded and synchronized to the network device, which provides conditions and basis for improving the accuracy of the execution condition configuration of the CPAC and the robustness of the CPAC.

FIG. 3 is a flowchart of a processing CPAC method according to an embodiment of the disclosure. The method is performed by a terminal. As illustrated in FIG. 3, the method includes but is not limited to the following steps.

At step 301, after CPAC is successful, whether a serving cell is a candidate PScell of the CPAC is recorded in a measurement result of the serving cell.

At step 302, whether a neighbor cell is a candidate PScell of the CPAC is recorded in a measurement result of the neighbor cell.

That is, after the CPAC is successful, the terminal may record the trigger information of each cell in the measurement result of each cell.

For example, taking the neighbor cell as an example, for each neighbor cell in a measurement result neighbor cell list (measResultNeighCellListNR) in a new radio (NR) measurement result list 2 (MeasResultList2NR), when the neighbor cell belongs to the candidate PScell of the CPAC, a value of a CPAC candidate field (cpacCandidate) of the neighbor cell is set to "true", otherwise, the value of cpacCandidate is set to "false".

Optionally, when a certain neighbor cell is a target PSCell for a successful handover, no indication is required. That is, when a certain neighbor cell is determined, by the terminal according to a satisfaction situation of the trigger condition, as the target PSCell to be switched by the CPAC, in order to minimize the amount of information recorded and reported, the above field corresponding to the neighbor cell may be omitted.

Optionally, in a case where the serving cell is the candidate PScell of the CPAC, its associated execution condition configuration of the CPAC, the first condition information and the like are recorded in the measurement result of the serving cell. When the neighbor cell is the candidate PScell of the CPAC, its associated execution condition configuration of the CPAC, the first condition information and the like are recorded in the measurement result of the neighbor cell.

In the disclosure, the terminal may reuse an existing field in the measurement result of the cell or define a new field to record the first condition information.

For example, a value of a field "condFirst event fullfilled" in the measurement result of the cell may be used to indicate whether the first trigger condition is satisfied. For example, when the value is 1, it indicates that the first trigger condition is satisfied, otherwise, it indicates that the first trigger condition is not satisfied. Alternarively, a value of a field "condSecond event fullfilled" is used to indicate whether the second trigger condition is satisfied. For example, when the value is 1, it indicates that the second trigger condition is satisfied, otherwise, it indicates that the second trigger condition is not satisfied. A value of a field "first triggered event" may be used to represent the trigger condition that is satisfied first. For example, if the value of the field is 0, it indicates that the first trigger condition is satisfied first, otherwise, it indicates that the second trigger condition is satisfied first. A field "time between events" may be used to represent a satisfaction time interval between a time when a trigger condition is satisfied and another time when another trigger condition is satisfied subsequently.

The above steps 301 and 302 may be executed simultaneously, or step 302 may be executed first and then step 301, which is not limited by this disclosure.

At step S303, a CPAC report is sent to a network device, in which the CPAC report includes measurement results of the serving cell and the neighbor cell.

The specific implementation of step 303 may be referred to the detailed description of any embodiment of the disclosure, which will not be repeated here.

In the disclosure, after determining that the CPAC is successful, the terminal may record whether the cell is the candidate PScell of the CPAC in the measurement result of the cell, and synchronize the measurement result of the cell to the network device through the CPAC report. Therefore, the trigger information of the CPAC is recorded and synchronized to the network device, which provides conditions and basis for improving the accuracy of the execution condition configuration of the CPAC and the robustness of the CPAC.

FIG. 4 is a flowchart of a CPAC processing method according to an embodiment of the disclosure. The method is performed by a terminal. As illustrated in FIG. 4, the method includes but is not limited to the following steps.

At step 401, after CPAC is successful, an execution condition configuration of the CPAC associated with a first cell is recorded in a measurement result of the first cell, in which the first cell is a target PScell for a successful handover or a candidate PScell of the CPAC.

The target PScell is a PScell that the terminal, in the process of the CPAC, determines that the corresponding trigger condition is satisfied and is able to access.

That is, after the CPAC is successfully, the terminal may record the execution condition configurations of the cell in the measurement results of the target PScell and the candidate PScell of the CPAC respectively. For example, various trigger conditions that trigger access to the cell are recorded.

At step 402, the measurement result of the first cell is sent to a network device.

Optionally, the terminal sends the measurement result of the first cell to the network device by sending a CPAC report.

The specific implementation process of the above step 402 can be referred to the detailed description of any embodiment of the disclosure and will not be repeated here.

In this disclosure, after determining that CPAC is successful, the terminal records the associated execution condition configurations in the measurement results of the target PScell for a successful handover and each candidate PScell respectively, and sends the recorded cell measurement results to the network device. Therefore, after the CPAC is successfully, the terminal synchronizes the execution condition configuration associated with the cell to the network device, which provides conditions and basis for improving the accuracy of the execution condition configuration of the CPAC and the robustness of the CPAC.

FIG. 5 is a flowchart of a CPAC processing method according to an embodiment of the disclosure. The method is performed by a terminal. As illustrated in FIG. 5, the method includes but is not limited to the following steps.

At step 501, after CPAC is successful, first condition information of a first cell is recorded in a measurement result of the first cell.

The first cell is a target PScell for a successful handover or a candidate PScell of the CPAC.

Optionally, when a first trigger condition in the execution condition configuration of the CPAC of the first cell is satisfied, the terminal may record, in the measurement result of the first cell, that the first trigger condition is satisfied.

Optionally, when a second trigger condition in the execution condition configuration of the CPAC of the first cell is satisfied, the terminal may record, in the measurement result of the first cell, that the second trigger condition is satisfied. Optionally, when both the first trigger condition and the second trigger condition in the execution condition configuration of the CPAC of the first cell are satisfied, the terminal may record, in the measurement result of the first cell, a trigger condition among the first trigger condition and the second trigger condition that is satisfied first.

Optionally, when both the first trigger condition and the second trigger condition in the execution condition configuration of the CPAC of the first cell are satisfied, the terminal may indicate, in the measurement result of the first cell, a satisfaction time interval between a first time when the first trigger condition is satisfied and a second time when the second trigger condition is satisfied.

In the disclosure, the terminal may record and indicates the above information by reusing a relevant field in the measurement result of the cell, or, may record the above information by defining a new field, which is not limited by this disclosure.

It should be noted that the terminal may only record one or more, or all of the above information in the measurement result of the first cell, which is not limited by this disclosure.

At step 502, a CPAC report is sent to a network device, in which the CPAC report includes the measurement result of the first cell.

The specific implementation process of the above step 502 can be referred to the detailed description of any embodiment of the disclosure, and will not be repeated here.

In the disclosure, after determining that CPAC is successful, the terminal may record the first condition information in the measurement results of the target PScell for a successful handover and each candidate PScell respectively, and send the recorded measurement result the cell to the network device through the CPAC report. Therefore, after the CPAC is successful, the terminal device synchronizes the first condition information of the cell to the network device, which provides conditions and basis for improving the accuracy of the execution condition configuration of the CPAC and the robustness of the CPAC.

FIG. 6 is a flowchart of a CPAC processing method according to an embodiment of the disclosure. The method is performed by a network device. As illustrated in FIG. 6, the method includes but is not limited to the following steps.

At step 601, trigger information of the CPAC sent by a terminal is received, in which the trigger information is recorded by the terminal in a case where CPAC is successful.

Optionally, the trigger information includes at least one of: information about whether a serving cell and/or a neighbor cell is a candidate PScell of the CPAC; an execution condition configuration of the CPAC associated with a serving cell and/or a neighbor cell; or first condition information.

The serving cell is a serving cell where the terminal is located after performing the CPAC successfully, and the neighbor cell is a neighbor cell of the serving cell where the terminal is located after performing the CPAC successfully. The execution condition configuration is the execution condition associated with the candidate PScell configured by the network device, which may include various trigger conditions for triggering access to the candidate PScell.

Optionally, the first condition information may include at least one of: information about whether a first trigger condition is satisfied, information about whether a second trigger condition is satisfied, a trigger condition that is satisfied first, and a satisfaction time interval between a time when a trigger condition is satisfied and another time when another trigger condition is satisfied subsequently.

The first trigger condition is a trigger condition associated with the first Measure ID in the execution condition configuration of the CPAC, and the second trigger condition is a trigger condition associated with the second Measure ID in the execution condition configuration of the CPAC. Generally, the network device may configure two Measure IDs in the execution condition configuration of each candidate PScell. In sequence, the first Measure ID is associated with the first trigger condition, and the second Measure ID is associated with the second trigger condition. When all trigger conditions of a certain candidate PScell are satisfied, random access may be initiated to the candidate PScell.

Usually, one Measure ID is associated with a mapping between one measured object and one report configuration (trigger condition), and one report configuration may be configured with various triggered events. When all the triggered events in the report configuration are satisfied, the trigger condition is satisfied.

In this disclosure, in a case of receiving the trigger information of the CPAC sent by the terminal, the network device may determine a satisfaction condition of the execution condition configurations associated with each candidate PScell, and then updates or adjusts the execution condition configuration associated with each candidate PScell in combination with the satisfaction condition of various execution condition configurations currently and a network environment.

Optionally, the network device may receive the trigger information of the CPAC satisfaction condition through a CPAC report. That is, the network device may receive the CPAC report sent by the terminal, and the CPAC report includes the trigger information.

In this disclosure, the network device may receive the trigger information of the CPAC sent by the terminal in a case where the CPAC is successful, which provides conditions and basis for improving the accuracy of the execution condition configuration of the CPAC and the robustness of the CPAC.

FIG. 7 is a flowchart of a CPAC processing method provided by an embodiment of the disclosure. The method is performed by a network device. As illustrated in FIG. 7, the method includes but is not limited to the following steps.

At step 701, a CPAC report sent by a terminal is received, in which the CPAC report includes a cell measurement result.

At step 702, whether a serving cell is a candidate PScell of the CPAC is determined according to a measurement result of the serving cell.

At step 703, whether a neighbor cell is a candidate PScell of the CPAC is determined according to a measurement result of the neighbor cell.

Optionally, the network device may determine whether the serving cell is the candidate PScell of the CPAC according to a value of a specific field in the measurement result of the serving cell, and determines whether the neighbor cell is the candidate PScell of the CPAC according to a value of a specific field in the measurement result of the neighbor cell.

The specific implementation of using the field in the cell measurement result to indicate whether the cell is the candidate PScell of the CPAC may be referred to the detailed description of any embodiment of the disclosure on the terminal side, and will not be repeated here.

The above steps 702 and 703 may be performed simultaneously. That is, after receiving the CPAC report sent by the terminal, the network device may determine whether the corresponding cell is the candidate PScell of the CPAC according to the measurement result of each cell in the report. Alternatively, step 703 may be executed before step 702, which is not limited by this disclosure.

It is understood that after receiving the CPAC report sent by the terminal, the network device may determine whether the corresponding cell is the candidate PScell of the CPAC according to the measurement result of each cell in the report, and adjusts or updates the execution condition configurations of the candidate PScell in combination with the measurement result of each cell.

In the disclosure, after receiving the CPAC report sent by the terminal, the network device may determine whether the corresponding cell is the candidate PScells of the CPAC according to the measurement results of each cell in the report, which provides conditions and basis for improving the accuracy of the execution condition configuration of the CPAC and the robustness of CPAC.

FIG. 8 is a flowchart of a CPAC processing method provided by an embodiment of the disclosure. The method is performed by a network device. As illustrated in FIG. 8, the method includes but is not limited to the following steps.

At step 801, a CPAC report sent by a terminal is received, in which the CPAC report includes a measurement result of a first cell.

The first cell is a target PScell for a successful handover or a candidate PScell of the CPAC.

The definitions of the target PScell and the candidate PScell may be referred to the detailed description of any embodiment of the disclosure on the terminal side, and will not be repeated here.

The specific implementation of step 801 may be referred to the detailed description of any embodiment of the disclosure, which will not be repeated here.

At step 802, an execution condition configuration of the CPAC associated with the first cell is obtained from the measurement result of the first cell.

The execution condition configuration of the CPAC associated with the first cell is an associated execution condition configuration configured for the terminal by the network device when configuring the candidate PScells for the terminal. Alternatively, the execution condition configuration of the CPAC associated with the first cell may be information obtained after the terminal processes the execution condition configuration configured by the network device, which is not limited by this disclosure.

It should be noted that after receiving the execution condition configuration of the CPAC associated with the target PScell and/or the candidate PScell reported by the terminal, the network device may update or adjust the execution condition configuration according to the measurement result, so as to ensure the accuracy and reliability of the execution condition configuration associated with each candidate PScell as much as possible, thereby improving the robustness of the CPAC.

In the disclosure, after receiving the CPAC report sent by the terminal, the network device may determine the execution condition configuration of the CPAC associated with the first cell according to the measurement result of the first cell in the report, which provides conditions and basis for the network device to provide more accurate and reliable execution condition configurations, and improves the robustness of the CPAC.

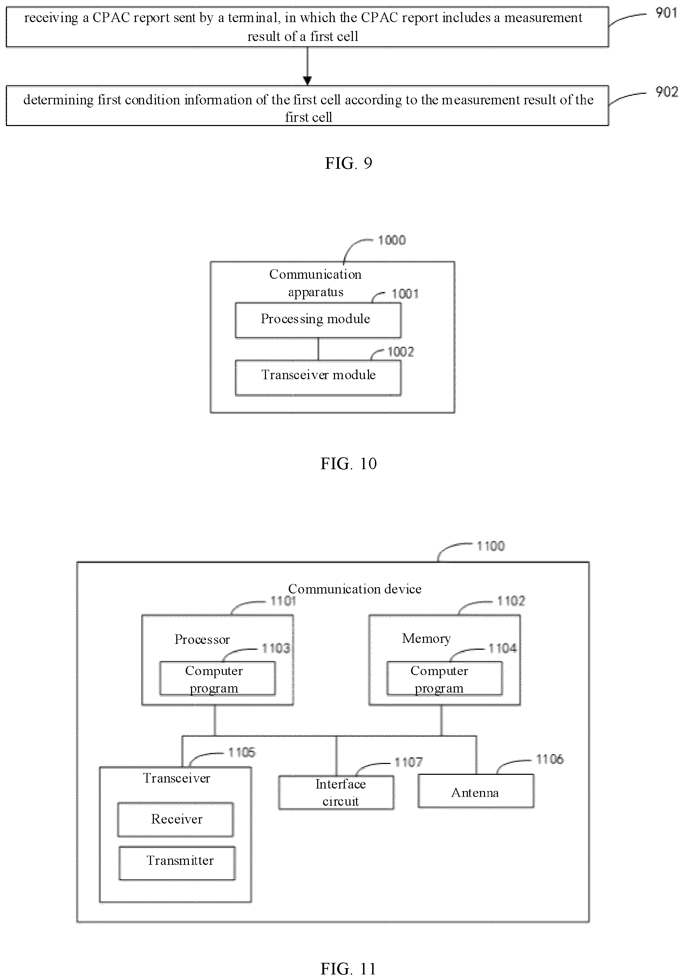

FIG. 9 is a flowchart of a CPAC processing method provided by an embodiment of the disclosure. The method is performed by a network device. As illustrated in FIG. 9, the method includes but is not limited to the following steps.

At step 901, a CPAC report sent by a terminal is received, in which the CPAC report includes a measurement result of a first cell.

The first cell is a target PScell for a successful handover or a candidate PScell of the CPAC.

At step 902, first condition information of the first cell is determined according to the measurement result of the first cell.

Optionally, the network device may determine whether a first trigger condition in an execution condition configuration of the CPAC of the first cell is satisfied according to the measurement result of the first cell.

Optionally, the network device may determine whether a second trigger condition in the execution condition configuration of the CPAC of the first cell is satisfied according to the measurement result of the first cell.

Optionally, the network device may determine the trigger condition that is satisfied first among the first trigger condition and the second trigger condition in the execution condition configuration of the CPAC of the first cell according to the measurement result of the first cell.

Optionally, the network device may determine a satisfaction time interval between a first time when the first trigger condition is satisfied and a second time when the second trigger condition is satisfied according to the measurement result of the first cell, in which the first trigger condition and the second trigger condition are in the execution condition configuration of the CPAC of the first cell.

It should be noted that the measurement result of the first cell may contain one or more, or all of the above information. For example, a specific field in the measurement result of the first cell is configured to indicate whether the first trigger condition is satisfied, and when a value of this field is 1, it indicates that the first trigger condition is satisfied, otherwise, it indicates that the first trigger condition is not satisfied, which is not limited by the disclosure.

After determining the first condition information of the first cell, the network device may update and adjust the execution condition configuration of the cell according to the measurement result of the cell, which improves the accuracy and reliability of the execution condition configuration of the CPAC, thereby improving the robustness of CPAC.

In the disclosure, after receiving the CPAC report sent by the terminal, the network device may determine the first condition information of the first cell according to the measurement result of the first cell in the report, which provides conditions and basis for improving the reliability and robustness of the execution condition configuration of the CPAC.

FIG. 10 is a schematic diagram of a communication apparatus 1000 provided by an embodiment of the present disclosure. The communication apparatus 1000 shown in FIG. 10 may include a processing module 1001 and a transceiver module 1002. The transceiver module 1002 may include a sending module and/or a receiving module. The sending module is configured for realizing a sending function, and the receiving module is configured for realizing a receiving function. The transceiver module 1002 may realize the sending function and/or the receiving function.

It is understood that the communication apparatus 1000 may be a terminal, an apparatus in the terminal, or an apparatus that is able to be used together with the terminal.

When the communication apparatus 1000 is configured on the terminal side,
the processing module 1001 is configured to, in a case where the CPAC is successful, record trigger information of the CPAC, and
the transceiver module 1002 is configured to send the trigger information to a network device.

Optionally, the trigger information includes at least one of:
information about whether a serving cell and/or a neighbor cell is a candidate PScell of the CPAC;
an execution condition configuration of the CPAC associated with the serving cell and/or the neighbor cell; or
first condition information.

Optionally, the processing module 1001 is configured to:
record, in a measurement result of the serving cell, whether the serving cell is a candidate PScell of the CPAC; and/or,
record, in a measurement result of the neighbor cell, whether the neighbor cell is a candidate PScell of the CPAC.

Optionally, the processing module 1001 is configured to:
record, in a measurement result of a first cell, an execution condition configuration of the CPAC associated with the first cell, wherein the first cell is a target PScell for a successful handover or a candidate PScell of the CPAC

Optionally, the trigger information includes at least one of:
information about whether a first trigger condition is satisfied, in which the first trigger condition is a trigger condition associated with a first measure ID in an execution condition configuration of the CPAC;
information about whether a second trigger condition is satisfied, in which the second trigger condition is a trigger condition associated with a second measure ID in an execution condition configuration of the CPAC;
a trigger condition that is satisfied first; or
a satisfaction time interval between a time when a trigger condition is satisfied and another time when another trigger condition is satisfied subsequently.

Optionally, the processing module 1001 is configured to:
in a case where the first trigger condition in the execution condition configuration of the CPAC of a first cell is satisfied, record, in a measurement result of the first cell, that the first trigger condition is satisfied;
in a case where the second trigger condition in the execution condition configuration of the CPAC of a first cell is satisfied, record, in a measurement result of the first cell, that the second trigger condition is satisfied;
in a case where both the first trigger condition and the second trigger condition in the execution condition configuration of the CPAC of a first cell are satisfied, record, in a measurement result of the first cell, a trigger condition among the first trigger condition and the second trigger condition that is satisfied first; and/or,
in a case where both the first trigger condition and the second trigger condition in the execution condition configuration of the CPAC of a first cell are satisfied, indicate, in a measurement result of the first cell, a satisfaction time interval between a first time when the first trigger condition is satisfied and a second time when the second trigger condition is satisfied;
in which the first cell is a target PScell for a successful handover or a candidate PScell of the CPAC.

Optionally, the transceiver module 1002 is configured to:
send a CPAC report to the network device, in which the CPAC report includes the trigger information.

In the disclosure, after determining that the CPAC is successful, the terminal records the trigger information of the CPAC and synchronize the trigger information to the network device. The trigger information of the CPAC is recorded and synchronized to the network device, which provides conditions and basis for improving the accuracy of the execution condition configuration of the CPAC and the robustness of the CPAC.

It is understood that the communication apparatus 1000 may be a network device, an apparatus in the network device, or an apparatus that may be used together with the network device.

When the communication apparatus 1000 is configured on the network device side,
the transceiver module 1002 is configured to receive trigger information of the CPAC sent by a terminal, wherein the trigger information is recorded by the terminal in a case where the CPAC is successful.

Optionally, the trigger information includes at least one of:
information about whether a serving cell and/or a neighbor cell is a candidate PScell of the CPAC;
an execution condition configuration of the CPAC associated with a serving cell and/or a neighbor cell; or
first condition information.

Optionally, the processing module 1001 is configured to:
determine whether the serving cell is a candidate PScell of the CPAC according to a measurement result of the serving cell; and/or,
determine whether the neighbor cell is a candidate PScell of the CPAC according to a measurement result of the neighbor cell.

Optionally, the processing module 1001 is configured to:
obtain, from a measurement result of a first cell, an execution condition configuration of the CPAC associated with the first cell, wherein the first cell is a target PScell for a successful handover or a candidate PScell of the CPAC.

Optionally, the trigger information includes at least one of:
information about whether a first trigger condition is satisfied, wherein the first trigger condition is a trigger condition associated with a first measure ID in an execution condition configuration of the CPAC;
information about whether a second trigger condition is satisfied, wherein the second trigger condition is a trigger condition associated with a second measure ID in an execution condition configuration of the CPAC;
a trigger condition that is satisfied first; and
a satisfaction time interval between a time when a trigger condition is satisfied and another time when another trigger condition is satisfied subsequently.

Optionally, the processing module 1001 is configured to:
determine, according to a measurement result of a first cell, whether the first trigger condition in the execution condition configuration of the CPAC of the first cell is satisfied;
determine, according to a measurement result of a first cell, whether the second trigger condition in the execution condition configuration of the CPAC of the first cell is satisfied;
determine, according to a measurement result of a first cell, a trigger condition among the first trigger condition and the second trigger condition in the execution condition configuration of the CPAC of the first cell that is satisfied first and/or,
determine, according to a measurement result of a first cell, a satisfaction time interval between a first time when the first trigger condition is satisfied and a second time when the second trigger condition is satisfied, wherein the first trigger condition and the second trigger condition are in the execution condition configuration of the CPAC of the first cell;
in which the first cell is a target PScell for a successful handover or a candidate PScell of the CPAC.

Optionally, the transceiver module 1002 is configured to:
receive a CPAC report sent by the terminal, in which the CPAC report includes the trigger information.

In this disclosure, the network device may receive the trigger information of the CPAC sent by the terminal after the CPAC is successful, which provides the conditions and basis for improving the accuracy of CPAC execution condition configuration and the robustness of CPAC.

FIG. 11 is a schematic diagram of another communication apparatus 1100 provided by an embodiment of the disclosure. The communication apparatus 1100 may be a network device, a terminal, or may be a chip, a chip system or a processor that supports the network device to realize the above-described method, or may be a chip, a chip system or a processor that supports the terminal to realize the above-described method. The device may be used to realize the methods described in the above method embodiments with reference to the description of the above-described method embodiments.

The communication apparatus 1100 may include one or more processors 1101. The processor 1101 may be a general purpose processor or a dedicated processor, such as, a baseband processor and a central processor. The baseband processor is used for processing communication protocols and communication data, and the central processor is used for controlling the communication apparatus (e.g., a base station, a baseband chip, a terminal, a terminal chip, a DU, or a CU), executing computer programs, and processing data of the computer programs.

Optionally, the communication apparatus 1100 may include one or more memories 1102 on which a computer program 1104 may be stored. The processor 1101 executes the computer program 1104 to cause the communication apparatus 1100 to perform the methods described in the above method embodiments. Optionally, the memory 1102 may also store data. The communication apparatus 1100 and the memory 1102 may be provided separately or may be integrated together.

Optionally, the communication apparatus 1100 may also include a transceiver 1105 and an antenna 1106. The transceiver 1105 may be referred to as a transceiver unit, a transceiver machine, or a transceiver circuit, for realizing a transceiver function. The transceiver 1105 may include a receiver and a transmitter. The receiver may be referred to as a receiving machine or a receiving circuit, for realizing the receiving function. The transmitter may be referred to as a transmitter machine or a transmitting circuit, for realizing the transmitting function.

Optionally, the communication apparatus 1100 may also include one or more interface circuits 1107. The interface circuits 1107 are used to receive code instructions and transmit the code instructions to the processor 1101. The processor 1101 runs the code in structions to cause the communication apparatus 1100 to perform the methods described in the method embodiments.

If the communication apparatus 1100 is a terminal, the processor 1101 is used to execute step 201 in FIG. 2, steps 301 and 302 in FIG. 3, step 401 in FIG. 4, and step 501 in FIG. 5. The transceiver 1105 is used to perform step 202 in FIG. 2, step 303 in FIG. 3, step 402 in FIG. 4, and step 502 in FIG. 5.

If the communication apparatus 1100 is a network device, the processor 1101 is used to execute steps 702 and 703 in FIG. 7, and step 902 in FIG. 9. The transceiver 1105 is used to execute step 601 in FIG. 6, step 701 in FIG. 7, step 801 in FIG. 8, and step 901 in FIG. 9.

In an implementation, the processor 1101 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1101 may store a computer program 1103. When the computer program 1103 runs on the processor 1101, the communication apparatus 1100 is caused to perform the methods described in the method embodiments above. The computer program 1103 may be solidified in the processor 1101, and in such case, the processor 1101 may be implemented by hardware.

In an implementation, the communication apparatus 1100 may include circuits. The circuits may implement the sending, receiving or communicating function in the preceding method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the description of the above embodiments may be a network device or a smart relay, but the scope of the communication apparatus described in the disclosure is not limited thereto, and the structure of the communication apparatus may not be limited by FIG. 11. The communication apparatus may be a stand-alone device or may be part of a larger device. For example, the communication apparatus may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

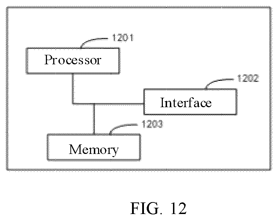

The case that the communication apparatus may be a chip or a chip system can be referred to the schematic diagram of the chip shown in FIG. 12. The chip shown in FIG. 12 includes a processor 1201 and an interface 1202. There may be one or more processors 1201, and there may be multiple interfaces 1202.

For the case where the chip is used to realize the function of the terminal in the embodiment of the disclosure,
the interface 1202 is configured to perform step 202 in FIG. 2, step 303 in FIG. 3, step 402 in FIG. 4, and step 502 in FIG. 5.

For the case where the chip is used to realize the function of the network device in the embodiment of the disclosure,
the interface 1202 is configured to perform step 601 in FIG. 6, step 701 in FIG. 7, step 801 in FIG. 8, and step 901 in FIG. 9.

Optionally, the chip also includes a memory 1203 for storing necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device integrated by one or more usable mediums such as a server and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understand that first, second, and other various numerical numbers involved in the disclosure are only described for the convenience of differentiation, and are not used to limit the scope of the embodiments of the disclosure or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of this type, the technical features described using the "first", "second", and "third", and " A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication apparatus, and the values or representations of the parameters may be other values or representations that can be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions within the technical scope disclosed by the disclosure, which shall be covered by the scope of protection of the disclosure. Therefore, the scope of protection of the disclosure shall be governed by the scope of protection of the attached claims.

## Claims

1. A conditional primary secondary cell (PScell) addition or change (CPAC) processing method, performed by a terminal, comprising:
in response to the CPAC being successful, recording trigger information of the CPAC; and
sending the trigger information to a network device.

2. The method of claim 1, wherein the trigger information comprises at least one of:
information about whether a serving cell and/or a neighbor cell is a candidate PScell of the CPAC;
an execution condition configuration of the CPAC associated with a serving cell and/or a neighbor cell; or
first condition information.

3. The method of claim 2, wherein recording the trigger information of the CPAC, comprises:
recording, in a measurement result of the serving cell, whether the serving cell is a candidate PScell of the CPAC; and/or,
recording, in a measurement result of the neighbor cell, whether the neighbor cell is a candidate PScell of the CPAC.

4. The method of claim 2, further comprising:
recording, in a measurement result of a first cell, an execution condition configuration of the CPAC associated with the first cell, wherein the first cell is a target PScell for a successful handover or a candidate PScell of the CPAC.

5. The method of claim 2, wherein the first condition information comprises at least one of:
information about whether a first trigger condition is satisfied, wherein the first trigger condition is a trigger condition associated with a first measure identification (ID) in an execution condition configuration of the CPAC;
information about whether a second trigger condition is satisfied, wherein the second trigger condition is a trigger condition associated with a second measure ID in an execution condition configuration of the CPAC;
a trigger condition that is satisfied first; or
a satisfaction time interval between a time when a trigger condition is satisfied and another time when another trigger condition is satisfied subsequently.

6. The method of claim 5, further comprising:
in response to the first trigger condition in the execution condition configuration of the CPAC of a first cell being satisfied, recording, in a measurement result of the first cell, that the first trigger condition is satisfied;
in response to the second trigger condition in the execution condition configuration of the CPAC of a first cell being satisfied, recording, in a measurement result of the first cell, that the second trigger condition is satisfied;
in response to both the first trigger condition and the second trigger condition in the execution condition configuration of the CPAC of a first cell being satisfied, recording, in a measurement result of the first cell, a trigger condition among the first trigger condition and the second trigger condition that is satisfied first; and/or,
in response to both the first trigger condition and the second trigger condition in the execution condition configuration of the CPAC of a first cell being satisfied, indicating, in a measurement result of the first cell, a satisfaction time interval between a first time when the first trigger condition is satisfied and a second time when the second trigger condition is satisfied;
wherein the first cell is a target PScell for a successful handover or a candidate PScell of the CPAC.

7. The method of any one of claims 1-6, further comprising:
sending a CPAC report to the network device, wherein the CPAC report comprises the trigger information.

8. A conditional primary secondary cell (PScell) addition or change (CPAC) processing method, performed by a network device, comprising:
receiving trigger information of the CPAC sent by a terminal, wherein the trigger information is recorded by the terminal in response to the CPAC being successful.

9. The method of claim 8, wherein the trigger information comprises at least one of:
information about whether a serving cell and/or a neighbor cell is a candidate PScell of the CPAC;
an execution condition configuration of the CPAC associated with a serving cell and/or a neighbor cell; or
first condition information.

10. The method of claim 9, further comprising:
determining whether the serving cell is a candidate PScell of the CPAC according to a measurement result of the serving cell; and/or,
determining whether the neighbor cell is a candidate PScell of the CPAC according to a measurement result of the neighbor cell.

11. The method of claim 9, further comprising:
obtaining, from a measurement result of a first cell, an execution condition configuration of the CPAC associated with the first cell, wherein the first cell is a target PScell for a successful handover or a candidate PScell of the CPAC.

12. The method of claim 9, wherein the trigger information comprises at least one of:
information about whether a first trigger condition is satisfied, wherein the first trigger condition is a trigger condition associated with a first measure identification (ID) in an execution condition configuration of the CPAC;
information about whether a second trigger condition is satisfied, wherein the second trigger condition is a trigger condition associated with a second measure ID in an execution condition configuration of the CPAC;
a trigger condition that is satisfied first; and
a satisfaction time interval between a time when a trigger condition is satisfied and another time when another trigger condition is satisfied subsequently.

13. The method of claim 12, further comprising:
determining, according to a measurement result of a first cell, whether the first trigger condition in the execution condition configuration of the CPAC of the first cell is satisfied;
determining, according to a measurement result of a first cell, whether the second trigger condition in the execution condition configuration of the CPAC of the first cell is satisfied;
determining, according to a measurement result of a first cell, a trigger condition among the first trigger condition and the second trigger condition in the execution condition configuration of the CPAC of the first cell that is satisfied first; and/or,
determining, according to a measurement result of a first cell, a satisfaction time interval between a first time when the first trigger condition is satisfied and a second time when the second trigger condition is satisfied, wherein the first trigger condition and the second trigger condition are in the execution condition configuration of the CPAC of the first cell;
wherein the first cell is a target PScell for a successful handover or a candidate PScell of the CPAC.

14. The method of any one of claims 8-12, further comprising:
receiving a CPAC report sent by the terminal, wherein the CPAC report comprises the trigger information.

15. A communication apparatus, comprising:
a processing module, configured to, in a case where conditional primary secondary cell (PScell) addition or change (CPAC) is successful, record trigger information of the CPAC; and
a transceiver module, configured to send the trigger information to a network device.

16. A communication apparatus, comprising:
a transceiver module, configured to receive trigger information of conditional primary secondary cell (PScell) addition or change (CPAC) sent by a terminal, wherein the trigger information is recorded by the terminal in a case where the CPAC is successful.

17. A communication apparatus, comprising a processor and a memory, wherein the memory stores a computer program, and the processor executes the computer program stored in the memory to cause the apparatus to perform the method of any one of claims 1-7.

18. A communication apparatus, comprising a processor and a memory, wherein the memory stores a computer program, and the processor executes the computer program stored in the memory to cause the apparatus to perform the method of any one of claims 8-14.

19. A communication system, comprising a terminal and a network device, wherein the terminal performs the method according to any one of claims 1-7, and the network device performs the method according to any one of claims 8-14.

20. A computer-readable storage medium for storing instructions, wherein when the instructions are executed, the method according to any one of claims 1-7 is performed.

21. A computer-readable storage medium for storing instructions, wherein when the instructions are executed, the method according to any one of claims 8-14 is performed.
